# FASCICULE DE BREVET EUROPEEN

(11) **EP 3 722 262 B1**
(45) Date de publication et mention de la délivrance du brevet: **13.09.2023**
(21) Numéro de dépôt: 20168530.2
(22) Date de dépôt: 07.04.2020
(51) Int. Cl.: C02F 3/32, E04H 4/12, C02F 1/32, C02F 103/42

(54) **SYSTEME DE FILTRATION D'EAU DE BAIGNADE**
BADEWASSERFILTRATIONSSYSTEM
BATHING WATER FILTRATION SYSTEM

(30) Priorité: 09.04.2019 FR 1903768
(43) Date de publication de la demande: 14.10.2020
(73) Titulaire: Azuvia, 84140 Avignon (FR)
(72) Inventeur: LOUP, Jean-Remi, 84450 Saint Saturnin les Avignon (FR); LUCAS, Olivier, 75015 PARIS (FR); FONTAINE, Paul-Etienne, 84450 Saint Saturnin les Avignon (FR); BAUDUIN, Tristan, 84450 Saint Saturnin les Avignon (FR)
(74) Mandataire: Barbot, Willy

(56) Documents cités:
- EP-A1- 2 230 213
- DE-A1-102010 019 352
- DE-U1-202011 051 132
- US-A1- 2016 095 301

## Description

### Domaine de l'invention

L'invention appartient au domaine de la filtration des eaux de baignade.

### Arrière-plan technologique de l'invention

Les piscines d'agréments nécessitent un entretien rigoureux dans le but de garantir la qualité de l'eau de baignade et, plus particulièrement, de maintenir cette eau claire, saine et sans impureté.

Il est connu de l'art antérieur des systèmes et des procédés de filtration d'eau de baignade utilisant des filtres divers tels que des filtres à sables, des filtres à cartouches, des filtres à diatomées ou des filtres à chaussettes.

Maintenant, ce type de filtration mécanique ne suffit pas à garantir la qualité de l'eau de baignade. Aussi, le recours à de nombreux produits chimiques reste donc nécessaire.

Il est connu de l'art antérieur d'utiliser une multitude de produits chimiques pour l'entretien et le nettoyage des piscines. On peut notamment citer les produits désinfectants, principalement à base de chlore, de brome, ou de polyhexaméthylène biguanide ; les produits clarifiants, principalement à base de dérivés chlorés, visant à limiter le développement de bactéries et d'algues ; les produits anticalcaires, destinés aux piscines contenant une eau dure ; les produits régulateurs de pH, permettant de corriger l'acidité ou l'alcalinité de l'eau de baignade ; les produits d'hivernage, utilisables pendant la période de non-utilisation de la piscine.

L'utilisation de ces produits implique une surveillance fréquente et régulière de différents paramètres de l'eau de baignade tel que le pH, la présence de bactéries, la turbidité, etc. De surcroît, il en résulte une eau de baignade dont la composition peut engendrer une irritation de la peau.

L'assiduité nécessaire de ces contrôles, de même que le coût des produits chimiques d'entretien et de nettoyage et la possible irritation de la peau en résultant représentent une contrainte non négligeable pour l'utilisateur sur le long terme, sans compter l'impact environnemental.

Il est également connu de l'art antérieur des bassins de baignade naturelle qui, contrairement aux piscines classiques, ne nécessitent aucun ajout de produits chimiques.

De tels bassins de baignade naturelle sont composés d'un bassin de baignade, d'un bassin d'épuration et de régénération, lesdits bassins étant reliés par un circuit d'acheminement avec pompes.

L'eau de baignade est pompée dans le bassin de baignade, puis envoyée dans le bassin adjacent d'épuration et de régénération. Un tel bassin comprend généralement un lit de pierres poreuses et des plantes ripicoles, où l'eau de baignade est naturellement épurée, filtrée et oxygénée.

Toutefois, de tels bassins de baignade naturelle présentent de nombreux inconvénients.

Le premier inconvénient de ces bassins de baignade naturelle réside dans la surface nécessaire à leur réalisation. En effet, le maintien d'un biotope équilibré nécessite une surface totale de l'ensemble des bassins de 60 m² *à minima,* de préférence 100 m², le bassin de baignade n'occupant qu'un tiers de la surface totale.

Un second inconvénient réside dans l'impossibilité de convertir une piscine d'agrément traditionnelle en bassin de baignade naturelle sans nécessiter de lourds travaux.

La solution conférée par la piscine naturelle est donc complexe et difficilement popularisable en l'état.

Le brevet européen EP 2 230 213 décrit un dispositif de purification de l'eau de piscines ou de bassins comprenant un ou plusieurs filtres prenant la forme de containers adjacents et hors-sol contenant plusieurs couches de graviers et de granulés filtrant, lesquels sont éventuellement plantés. Maintenant, ce type de dispositif de purification assure uniquement une purification mécanique, qui reste moins efficace qu'une filtration biologique. Par ailleurs, un tel dispositif de purification de l'eau nécessite de cumuler plusieurs containers filtrants, et donc une surface au sol importante, pour obtenir une eau de baignade de qualité acceptable, ce qui génère d'importantes contraintes spatiales.

La demande de brevet américain US 2016/095301 décrit un système de production de nourritures fondé les principes de l'aquaponie. Le système développé correspond à une serre présentant de multiples niveaux dans lesquels se trouvent des agrégats et sur lesquels poussent des plantes. L'eau qui est pompée d'un ou plusieurs réservoirs à poissons est introduite dans un niveau haut de la serre où elle est filtrée.

La demande de brevet Allemand DE 10 2010 019 352 décrit un réacteur à biomasse, dans lequel de la biomasse est produite à partir de plantes aquatiques au sein de structures superposées.

Le modèle d'utilité Allemand DE 20 2011 051 132 décrit un module de filtre transportable pour filtrer l'eau sanitaire pauvre en nutriments provenant d'une piscine ou d'un bassin de baignade, qui comprend un conteneur de transport pour une disposition hors sol, un biofiltre, au sein du conteneur de transport qui intègrent plusieurs étages à base de matériaux filtrants dont certains étages sont également plantés.

Ainsi, il existe un besoin de développer de nouveaux systèmes de filtrations efficaces permettant la conversion de piscines en bassins de baignade naturelle et qui occupent une superficie limitée.

### Sommaire de l'invention

Partant de ces constats, les inventeurs ont mis au point une nouvelle solution de filtration d'eau utilisant un système de filtration qui comprend plusieurs filtres plantés, protégés des aléas climatiques tout en présentant un encombrement réduit et bénéficiant d'un entretien simple.

En conséquence, un premier objet de l'invention porte sur un système de filtration selon la revendication 1.

Un deuxième objet de l'invention porte sur une piscine selon la revendication 4 qui comprend un système de filtration tel que défini précédemment.

Un troisième objet de l'invention porte sur un procédé de filtration de l'eau d'une piscine comprenant les étapes de :
+ pomper l'eau d'un bassin de baignade vers un système de filtration à travers un circuit d'acheminement;
+ filtrer cette eau au sein dudit système de filtration ; et
+ retourner l'eau une fois filtrée, de préférence à l'aide d'une seconde pompe, au bassin de baignade toujours à travers ce même circuit ;
caractérisé en ce que le système de filtration est tel que décrit précédemment.

De préférence, un tel procédé est destiné à diminuer les solides totaux dissous (TDS) dans l'eau et/ou à diminuer la concentration en phosphate dans cette même eau.

Un quatrième objet porte sur l'utilisation d'un système de filtration tel que défini précédemment pour la filtration de l'eau d'une piscine.

De préférence, cette utilisation vise à limiter les solides totaux dissous dans l'eau de baignade (TDS) et/ou à limiter la concentration en phosphate de cette eau.

### Description des figures

La figure 1 représente un diagramme d'une piscine selon l'invention.
La figure 2 représente schématiquement un mode de réalisation d'un système de filtration selon l'invention.
La figure 3 représente l'évolution de la quantité des Solides Totaux Dissous (TDS) dans l'eau en fonction du temps d'utilisation du système de filtration.
La figure 4 représente l'évolution de la concentration en phosphate dans l'eau de baignade en fonction du temps d'utilisation du système de filtration.
La figure 5 représente l'évolution de la demande chimique en oxygène (DCO) de l'eau de baignade en fonction du temps d'utilisation du système de filtration.
La figure 6 présente l'évolution de la longueur des parties aériennes (croissance foliaire) de menthes aquatiques (*Mentha aquatica*) présentes dans le filtre planté selon l'invention en fonction du temps d'utilisation du système de filtration.
La figure 7 présente l'évolution de la longueur du système racinaires de menthes aquatiques (*Mentha aquatica*) présentes dans le filtre planté selon l'invention en fonction du temps d'utilisation du système de filtration.

### Description détaillée de l'invention

Le terme « bassin de baignade » fait référence à un bassin artificiel, étanche, rempli d'eau, de dimensions variables. Typiquement, un tel bassin de baignade présente des dimensions permettant à un être humain de s'y plonger au moins partiellement. De façon générale, un tel bassin de baignade est de forme rectangulaire ou ronde. Pour ce qui est des formes rectangulaires, il existe globalement trois dimensions qualifiées de standards (8 × 4 m, 10 × 5 m ou 6 × 12 m) et ; pour ce qui est des formes rondes, les diamètres standards sont eux de 3m, 3,5m ou 4,60 m.

Un tel bassin de baignade peut être de type enterré préfabriqué ou encore construit.

Maintenant, un tel bassin de baignade peut également être de type hors-sol, c'est-à-dire posé à même le sol, et donc sans terrassement particulier, sur un terrain préparé.

On entend par « système de filtration », un système apte à retenir et/ou à dégrader des substances de nature diverse, présentes en suspension dans l'eau, afin d'en garantir la qualité et de la maintenir dans un état propre à la baignade.

Le terme « circuit d'acheminement » fait référence à un ensemble de conduites permettant le transfert de l'eau ainsi qu'aux éléments de connexion et de régulation associés, lesquels éléments peuvent être par exemple des pompes, des vannes, des répartiteurs, des valves, des écumeurs, des buses, etc.

Un circuit d'acheminement de la piscine selon l'invention comprend au moins une première conduite permettant l'acheminement de l'eau depuis le bassin de baignade vers le système de filtration et une seconde conduite permettant l'acheminement de l'eau filtrée depuis le système de filtration vers le bassin de baignade.

Cette première conduite comprend avantageusement, à une de ses extrémités, au moins un récupérateur, on parle plus généralement de skimmer, qui est apte à récupérer l'eau à la surface du bassin de baignade.

On entend par « conduite » un élément de section circulaire destiné à l'écoulement d'un fluide, ici l'eau du bassin de baignade. Ces conduites peuvent être composées de toutes matières rigides ou flexibles, de préférence de PVC ou de polyéthylène, de diamètre variable, de préférence d'un diamètre choisi parmi les standards de 63 mm, de 50 mm ou de 40 mm et, de manière encore plus préférée, d'un diamètre égal à 50 mm.

Avantageusement, cette première conduite est couplée à au moins une première pompe.

On entend par « pompe » un dispositif permettant d'aspirer et de refouler l'eau afin de provoquer son déplacement dans le circuit d'acheminement. A cette fin, cette pompe est positionnée en amont du système de filtration de sorte à ce qu'elle permette l'alimentation en eau de celui-ci. De préférence, cette pompe comprend un ou plusieurs filtres physiques permettant la rétention de solides ou autres objets qui pourraient l'endommager ou perturber son fonctionnement.

Cette pompe permet une circulation de l'eau dans le circuit d'acheminement à un débit de 3 à 15 m³/h, de préférence de 5 à 12 m³/h et, de manière encore plus préférée, de 8 à 10 m³/h.

Selon un mode de réalisation particulier, la piscine selon l'invention ne comprend qu'une pompe.

Selon un deuxième mode de réalisation particulier, la piscine selon l'invention comprend deux pompes.

Dans ce cas, cette seconde pompe est placée en aval du système de filtration. Cette seconde pompe permet de renvoyer l'eau filtrée vers le bassin de baignade via le circuit d'acheminement. Cette seconde pompe est calibrée de manière à engendrer un flux sortant ayant un débit sensiblement identique au débit du flux entrant dans le système de filtration.

Une telle configuration peut notamment être utilisée lorsque le système de filtration a été associé à une piscine classique qui, outre la stérilisation au chlore, présente une filtration à l'aide d'un filtre à sable ou à cartouche avec une pompe associée.

Dans ce cas, si l'adjonction de chlore est rendue inutile, il est possible de continuer à utiliser la filtration via le filtre à sable ou à cartouche.

Selon un autre mode de réalisation particulier, la première conduite peut être associée à un répartiteur général permettant l'orientation et/ou la répartition de l'eau, soit vers le système de filtration, soit vers une voie d'évacuation telle que le tout-à-l'égout afin de permettre un délestage ou une vidange partielle du bassin de baignade, soit vers la seconde conduite permettant le retour vers le bassin de baignade directement, en court-circuitant ainsi le système de filtration notamment lorsque celui-ci est en entretien.

Avantageusement, ce répartiteur général permet de calibrer et ainsi de limiter le débit d'entrée de l'eau dans le système de filtration, car un débit trop élevé pourrait engendrer une saturation dudit système de filtration. Typiquement, un tel répartiteur général prend la forme d'une vanne mécanique manuelle.

En fonctionnement normal, le taux de répartition de l'eau opéré par le répartiteur général vers le système de filtration est d'environ 35 à 75 %, de préférence d'environ 40 à 65 % et, de manière encore plus préférée, de 45 à 55 %.

Selon un autre mode de réalisation particulier, le répartiteur peut également envoyer l'eau provenant du bassin baignade vers une conduite permettant le retour vers le bassin de baignade via au moins un filtre classique de type filtre à sable ou filtre à cartouche.

Cette seconde conduite comprend, à une de ses extrémités, au moins une buse apte à refouler l'eau dans le bassin de baignade. Typiquement, et pour améliorer la filtration du bassin de baignade, on préférera avoir plusieurs buses (2 ou 3 généralement).

Selon un mode de réalisation particulier, la piscine selon l'invention peut également comprendre un moyen d'homogénéisation de l'eau de baignade dans le bassin. A titre d'exemple, il peut s'agir d'un dispositif de type « lame de fond ».

Selon un mode de réalisation particulier, cette seconde conduite comprend en outre un élément de connexion, de type connecteur en T, permettant l'arrivée d'un flux d'eau provenant du répartiteur général en court-circuitant le système de filtration.

En lien avec le système de filtration, le terme « serre » définit une structure close ou semi-ouverte, qui est translucide, du fait par exemple de l'emploi de verre, de plexiglas d'acrylique ou de plastique recyclé transparent, et qui soutenue par une structure, par exemple en métal, en bois ou en matière plastique rigide. Typiquement, une serre vise à protéger son contenu des éléments climatiques, afin d'améliorer leurs rendements, indépendamment des saisons, notamment grâce à un gain de température par effet de serre sous la structure.

Le système de filtration présente une surface au sol inférieure ou égale à 20% de

la surface au sol de la piscine.

La surface au sol du système de filtration est inférieure ou égale à 10 m², de préférence inférieure ou égale à 8 m² et, de manière particulièrement préférée, inférieure ou égale à 5 m².

Une telle réduction de surface est rendue possible grâce à la superposition des différents filtres dans la serre.

Comme précisé, les filtres au sein du système de filtration se présentent sous la forme de bacs. Ce terme « bac » fait référence à un récipient de dimension variable apte à contenir de l'eau et les divers composants de filtration qui seront décrits par la suite. Ces bacs peuvent être fabriqués à partir de divers matériaux, dès lors qu'ils leurs confèrent une étanchéité satisfaisante pour permettre l'éviction de fuite. A titre d'exemple, les bacs peuvent être en PVC, ou encore en bois, doublé par une membrane en PVC de type membrane agricole PVC.

Le au moins un filtre planté inférieur comprend des agrégats non solubles aptes à permettre la pousse de plantes et à capter les particules en suspension dans l'eau. Si ces agrégats peuvent prendre la forme de matière synthétique (plastique), on préférera utiliser des agrégats de minéraux et/ou végétaux. Dans le cas d'agrégats minéraux, on pourra utiliser des graviers, mais on préfèrera utiliser des minéraux de structure poreuse, comme la pouzzolane. Dans le cas d'agrégats végétaux, ceux-ci peuvent être à base de laine de chanvre ou de fibre de coco.

Le au moins un filtre planté inférieur permet d'accueillir un volume d'eau à filtrer compris entre 0,4 % et 15 %, de préférence entre 0,8 % et 8 % et, de manière particulièrement préférée compris entre 1,4 % et 2 % du volume total à filtrer. Les agrégats non solubles aptes à permettre la pousse de plantes et à capter les particules en suspension occupent avantageusement entre 25 % et 95 % du volume du bac du au moins un filtre planté inférieur, de préférence entre 50 % et 95% et, manière particulièrement préférée, entre 70 % et 95% de ce volume.

Selon un mode de réalisation préféré, ledit au moins un filtre planté inférieur comprend au moins une plante appartenant au genre *Mentha.*

Les plantes appartenant au genre *Mentha* sont des plantes herbacées vivaces de la famille des Lamiacées (Labiées), sous-famille des *Nepetoideae,* tribu des *Mentheae,* sous-tribu des *Menthinae.* Ce genre comprend de nombreuses espèces, dont beaucoup sont cultivées comme plantes aromatiques et condimentaires, ornementales ou médicinales.

De préférence, la plante appartenant au genre *Mentha* est choisie entre *Mentha aquatica* et *Mentha citrata.*

Avantageusement, ledit au moins un filtre planté inférieur comprend en outre :
o Au moins une plante appartenant au genre *Lythrum* ;
o Au moins une plante appartenant au genre *Phalaris* ; et
o Au moins une plante appartenant au genre *Phragmites.*

Le genre *Lythrum* est un genre de plantes appartenant à la famille des Lythracées dont l'espèce la plus connue est la Salicaire commune (*Lythrum salicaria*)*.* Avantageusement, ladite plante est apte à pousser en milieu humide et, de préférence, elle est choisie comprenant *Lythrum alatum, Lythtrum portula, Lythrum salicaria* et *Lythrum tribracteatum.*

Le genre *Phalaris,* comprend de nombreuses espèces réparties sur tous les continents à l'exception de l'Antarctique. De préférence cette plante est apte à pousser en milieu humide et, de manière particulièrement préférée, il s'agit de *Phalaris arundinacea.*

Le genre *Phragmites* est un genre de plantes herbacées de la famille des Poaceae, sous-famille des *Arundinoideae.* Ce genre comprend quatre espèces dont une comportant trois sous-espèces. De préférence, cette plante est apte à pousser en milieu humide et, de manière particulièrement préférée, il s'agit de *Phragmites australis.*

Chaque filtre planté supérieur se présente donc sous la forme d'un bac dans lequel sont immergés des pots permettant le passage de l'eau du bac et qui comprennent un substrat neutre et inerte accueillant les plantes du filtre.

Avantageusement, les pots utilisés permettent le passage des racines des plantes qu'elles accueillent.

Pour ce qui est du substrat neutre, il peut être identifié simplement par l'homme du métier. A titre d'exemple, on peut citer le sable, la pouzzolane, les billes d'argile, la laine de roche, etc.

Chaque filtre planté supérieur permet d'accueillir un volume d'eau à filtrer compris entre 0,2 % et 8 %, de préférence entre 0,4 % et 4,5 % et, de manière particulièrement préférée compris entre 0,75 % et 1 % du volume total à filtrer.

Les pots accueillant les plantes du filtre occupent avantageusement entre 0,5 % et 25 % du volume du bac du au moins un filtre planté supérieur, de préférence entre 3 % et 12 % et, manière particulièrement préférée, entre 5 % et 10 % de ce volume.

Typiquement, les pots utilisés présentent chacun un volume compris entre 0,5 et 10 l, de préférence entre 1 et 5 l.

Avantageusement, chaque filtre supérieur du système de filtration est recouvert d'une membrane de géotextile percée de telle manière à permettre le passage des parties aériennes des plantes du filtre. Cette membrane permet de protéger le flux d'eau à filtrer traversant les filtres de la chute inopinée de toutes particules solides telles que des poussières.

Selon un autre mode de réalisation préféré, chaque filtre planté supérieur comprend :
o Au moins une plante appartenant au genre *Caltha* ;
o Au moins une plante appartenant au genre *Juncus* ; et
o Au moins une plante appartenant au genre *Carex.*

Le genre *Caltha* englobe des plantes vivaces de la famille des Ranunculaceae, à laquelle dix espèces ont été affectées. Ces plantes sont présentes dans des environnements humides dans les régions tempérées et froides des hémisphères Nord et Sud. Leurs feuilles sont généralement en forme de coeur ou en forme de rein, et leurs fleurs sont en forme d'étoile de couleur jaune ou blanc.

De préférence, on choisira des plantes appartenant au genre Caltha apte à pousser en milieu humide. A titre d'exemple de telles plantes, on peut citer *Caltha palustris, Caltha novae zelandiae,* ou *Caltha natans.*

Le genre *Juncus* est un genre végétal de la famille des Juncaceae et constitue le principal genre de joncs. Ce sont des plantes herbacées vivaces vivant en milieu aquatique ou humide, dont la tige est droite et flexible. On la trouve souvent près des fossés où les sols sont très humides.

Cette au moins une plante appartenant au genre *Juncus* est choisie dans le groupe comprenant *Juncus acutiflorus, Juncus bryoides, Juncus bufonius, Juncus capitatus, Juncus confuses, Juncus dichotomus, Juncus digitatus, Juncusdrummondii, Juncus dubius, Juncus effusus, Juncus ensifolius, Juncus guadeloupensis, Juncus hemiendytus, Juncus heterophyllus, Juncus interor, Juncus megacephalus, Juncus nevadensis, Juncus nodosus, Juncus occidentalis, Juncus oxymeris, Juncus pallidus, Juncus parryi, Juncus sacimontanus, Juncus scheuchzerioides, Juncus triformis, Juncus uncialis, Juncus xiphioides.*

Maintenant, cette plante présente avantageusement une taille inférieure à 1 m, voir inférieur ou égale à 75 cm. A ce titre, cette au moins une plante est choisie dans le groupe comprenant *Juncus arcticus, Juncus balticus, Juncus bufonius, Juncus bulbosus, Juncus effusus, Juncus filiformis,* et *Juncus guadeloupensis.*

De préférence, cette plante est *Juncus effusus* ou *Juncus guadeloupensis.*

Le genre *Carex* est un genre de plantes de la famille des *Cyperaceae* qui sont appelées communément en français carex ou laîches et qui croissent pour l'essentiel dans les zones humides (landes, mares forestières...). Il s'agit de plantes à feuilles qui sont souvent coupantes, avec des tiges souvent de section triangulaire et des fleurs groupées en épis.

Ladite au moins une plante du genre *Carex* pousse avantageusement en milieu humide et, de préférence, elle est choisie dans le groupe comprenant *Carex acutiformis, Carex echinata, Carex ovalis, Carex panicea, Carex paniculata, Carex pendula* et *Carex pseudocyperus.*

Optionnellement, les filtres du système de filtration selon l'invention peuvent également comprendre d'autres espèces végétales. Des plantes d'ornementation et/ou des plantes aromatiques et/ou des légumes et/ou des fruits peuvent par exemple être intégrés.

Le système de filtration selon l'invention comprend une pluralité de filtres superposés spatialement. Certains sont positionnés au niveau du sol ; d'autres sont positionnés en hauteur, sur différents niveaux.

Un tel positionnement des filtres est rendu possible par la présence d'une structure porteuse.

Par « structure porteuse », on entend un ensemble de soutien apte à supporter les filtres placés en hauteur.

Il est possible d'intégrer, en plus des filtres supérieurs plantés, plusieurs filtres inférieurs plantés (2, 3, 4, etc.).

Avantageusement, l'eau circule par gravité au sein du système de filtration, depuis les bacs supérieurs vers les bacs inférieurs par simple écoulement.

Selon un mode de réalisation spécifique, le système de filtration comprend en outre au moins un bac de rétention. Ce bac de rétention est positionné en amont des différents filtres. Il permet de réceptionner l'eau du bassin de baignade à filtrer provenant transportée par la section d'acheminement du circuit d'alimentation, à distribuer de manière homogène l'eau à filtrer dans les différents filtres supérieurs, dans le cas où lesdits filtres supérieurs sont agencés en parallèles.

Selon encore un autre mode de réalisation spécifique, la piscine comprend en outre au moins un système de stérilisation par Ultra-Violets (UV). A titre d'exemple, le système de stérilisation par Ultra-Violets utilisable dans une piscine selon l'invention peut comprendre au moins une lampe germicide de type lampe UV C ou de type LED (diode électroluminescente) capable d'émettre des Ultra-Violets.

Un tel système de stérilisation par UV est bien connu de l'homme du métier et permet de garantir l'éviction de contaminations bactériologiques du bassin de baignade. Avantageusement, ce système de stérilisation par UV est positionné en aval du système de filtration.

Selon un autre mode de réalisation particulier, la piscine comprend en outre un robot de filtration.

Un tel robot de filtration est bien connu de l'homme du métier et il se positionne dans le bassin de baignade qu'il contribue à filtrer au moyen de filtres internes.

La présente invention a également pour objet un procédé de filtration de l'eau d'une piscine comprenant les étapes de :
o pomper l'eau d'un bassin de baignade vers un système de filtration à travers un circuit d'acheminement;
o filtrer cette eau au sein dudit système de filtration ; et
o retourner l'eau, une fois filtrée au bassin de baignade toujours à travers ce même circuit ;
caractérisé en ce que le système de filtration est tel que décrit précédemment.

Le procédé selon l'invention repose sur l'utilisation de la piscine telle que décrite précédemment.

Selon un mode de réalisation particulier, le procédé selon l'invention est destiné à diminuer les solides totaux dissous (TDS) dans l'eau.

On entend par solides totaux dissous (TDS), le résidu total qui reste après évaporation d'un échantillon d'eau qui a été filtré afin d'enlever les matières solides en suspension de plus de 1 mm de grosseur.

Le procédé selon l'invention est destiné à diminuer la fraction de solides totaux dissous dans l'eau à une valeur inférieure ou égale à 250 ppm, de préférence à une valeur inférieure ou égale à 200 ppm et, de manière encore plus préférée, à une valeur inférieure ou égale à 150 ppm.

Des méthodes de mesures des solides totaux dissous (TDS) sont bien connues de l'Homme du métier. Des méthodes de mesures par conductimétrie ou par évaporation peuvent être utilisées, de préférence des méthodes de mesures par conductimétrie.

Selon un autre mode de réalisation particulier, le procédé selon l'invention est destiné à diminuer de la concentration en phosphate dans l'eau de baignade.

Le procédé selon l'invention est destiné à diminuer la concentration en phosphate de l'eau de baignade à une valeur inférieure ou égale à 0.15 mg/L, de préférence à une valeur inférieure ou égale à 0.10 mg/L, de manière encore plus préférée à une valeur inférieure ou égale à 0.05 g/L.

Les phosphates (PO₄³⁻) sont des composés organophosphorés dérivés de l'acide phosphorique. En s'accumulant dans l'eau de baignade, ils peuvent être à l'origine du développement d'algues.

Des méthodes de mesures de la concentration en phosphate sont bien connues de l'Homme du métier. On peut notamment citer des méthodes colorimétriques utilisant des kits proposés dans le commerce tel que le HANNA Mini-photomètre checker et son réactif Phosphates Low Range commercialisé par HANNA^{®} instruments.

Une telle diminution de la concentration en phosphate dans l'eau de baignade permet avantageusement de limiter la prolifération d'algues ou de bactéries consommant ou accumulant des phosphates telles que les algues filamenteuses ou les cyanobactéries.

Selon un autre mode de réalisation particulier, le procédé selon l'invention est destiné en outre à diminuer la demande chimique en oxygène de l'eau de baignade.

Avantageusement, le procédé selon l'invention permet de diminuer la demande chimique en oxygène à une valeur inférieure ou égale à 50 mg/L, de préférence à une valeur inférieure ou égale à 20 mg/L, de manière encore plus préférée à une valeur inférieure ou égale à 10 mg/L.

La demande chimique en oxygène est un indicateur de la qualité de l'eau caractérisant un potentiel de consommation d'oxygène dissous par oxydation chimique des composés organiques et minéraux contenus dans l'eau, en général par le dichromate de potassium. La demande chimique en oxygène permet également de suivre la quantité de biomasse (algues et bactéries) présente dans le bassin de baignade. Les méthodes de mesures de la demande chimique en oxygène sont bien connues de l'Homme du métier. A titre d'exemple, la demande chimique en oxygène peut être mesurée par photométrie à l'aide du système commercialisé par HANNA^{®} instruments comprenant notamment un thermoréacteur et des tubes DCO comprenant du dichromate.

Selon un autre mode de réalisation particulier, le procédé selon l'invention est destiné en outre à diminuer la concentration en nitrate dans l'eau de baignade.

Avantageusement, le procédé selon l'invention permet de diminuer la concentration en nitrate à une valeur inférieure ou égale à 100 mg/L, de préférence à une valeur inférieure ou égale à 50 mg/L, de manière encore plus préférée à une valeur inférieure ou égale à 10 mg/L, ou encore à une valeur inférieure ou égale à 5 mg/L.

Avantageusement, le procédé selon l'invention est destiné à limiter la concentration de nitrate dans l'eau de baignade de sorte à prévenir le développement et la prolifération d'algues.

Les nitrates NO₃⁻ sont des ions polyatomiques qui sont de puissants eutrophisants et considérés comme des polluants. La présence d'un excès de nitrates dissous dans l'eau est un indice de pollution d'origine agricole (engrais), urbaine (dysfonctionnement des réseaux d'assainissement) ou industrielle. Les nitrates sont également utilisés comme nutriments par les algues, et leur présence dans l'eau va donc stimuler la croissance de celles-ci.

La présente invention a enfin pour objet une utilisation d'un système de filtration tel que défini précédemment pour la filtration de l'eau d'une piscine.

Selon un mode de réalisation particulier, cette utilisation vise en outre à limiter les solides totaux dissous dans l'eau (TDS).

Une telle utilisation permet avantageusement de limiter la concentration de solides totaux dissous dans l'eau (TDS) à une valeur égale ou inférieure à 250 ppm, de préférence à une valeur égale ou inférieure à 200 ppm et, de manière particulièrement préférée, à une valeur égale ou inférieure à 150 ppm.

Selon un autre mode de réalisation particulier, cette utilisation vise également à limiter la concentration en phosphate dans l'eau.

Une telle utilisation permet avantageusement de limiter la concentration en phosphate dans l'eau à moins de 0,15 g/L, de préférence 0,10 g/L, de manière particulièrement préférée à moins de 0,05 g/L.

Selon un mode de réalisation particulier, cette utilisation permet en outre de limiter la demande chimique en oxygène de l'eau de baignade.

Une telle utilisation permet avantageusement de limiter la demande chimique en oxygène de l'eau à une valeur inférieure ou égale à 50 mg/L, de préférence à une valeur inférieure ou égale à 20 mg/L, de manière encore plus préférée à une valeur inférieure ou égale à 10 mg/L.

Selon un autre mode de réalisation particulier, cette utilisation permet en outre de limiter la concentration en nitrate dans l'eau de baignade.

Une telle utilisation permet avantageusement de limiter la concentration en nitrate dans l'eau de baignade à une valeur inférieure ou égale à 100 mg/L, de préférence à une valeur inférieure ou égale à 50 mg/L, de manière encore plus préférée à une valeur inférieure ou égale à 10 mg/L, ou encore à une valeur inférieure ou égale à 5 mg/L.

D'autres avantages et caractéristiques de l'invention apparaitront mieux à la lecture de la description des modes de réalisation particuliers qui vont suivre, en référence aux dessins annexés, réalisés à titre d'exemples indicatifs et non limitatifs.

### Exemples :

### Installation du système de filtration

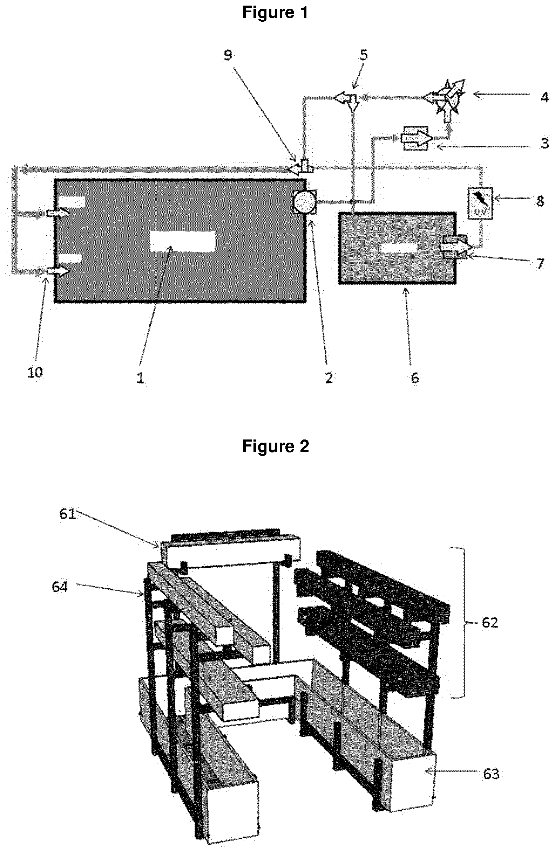

Comme présentée sur la figure 1, un système de filtration selon l'invention peut être adapté sur des piscines déjà construites (1). Une découpe de la conduite en PVC de la piscine (après la pompe du récupérateur) est effectuée pour raccorder le bassin de baignade au système de filtration par un manchon en PVC. Les conduites utilisées sont typiquement des tubes PVC pression rigide de diamètre 50 mm. Le système débute par un récupérateur (2) (skimmer) en amont d'une pompe (3). En sortie de ladite pompe, un répartiteur (4) à vanne manuelle mécanique en T est intégré et permet d'orienter l'eau vers le système de filtration, le tout à l'égout ou le retour bassin. Le répartiteur est également utilisé pour vider les excès d'eau et effectuer des opérations de calibrage.

Une seconde vanne manuelle mécanique en T (5) permet de séparer le flux en une première fraction dirigée dans le système de filtration (6), tandis que l'autre fraction est renvoyée au bassin sans traitement. Une telle seconde vanne permet ainsi de limiter le débit d'entrée dans le système de filtration, un débit trop élevé pouvant provoquer un débordement et/ou le délogement du substrat dans les filtres. Le taux de répartition est d'environ 45 à 55% en direction du système de filtration. Un tel taux de répartition permet la garantie d'un débit entrant dans le système de filtration de 3 à 5 m³/h.

Le fonctionnement en continu du filtre et l'agitation de l'eau du bassin par un robot permet avantageusement de garantir le passage de l'ensemble de l'eau du bassin de baignade dans le filtre.

Le système de filtration se présente sous la forme d'une serre telle que définie précédemment, ayant pour surface 5 m².

La figure 2 illustre un mode de réalisation d'un système de filtration selon l'invention incluant une structure porteuse métallique (64) qui porte un bac de rétention (61) recevant l'eau de baignade à filtrer et six filtres supérieurs plantés (62). Les six filtres supérieurs plantés sont disposés en deux ensembles formant deux circuits parallèles comportant chacun trois filtres plantés en série.

Les filtres supérieurs plantés se présentent sous la forme de bacs mesurant 2 m de longueur, 0,11 m de largeur, pour une hauteur de 0,11 m. Chacun de ces bacs comprend des pots remplis de pouzzolane, lesquels pots sont immergés dans les bacs. Chaque pot comprend au moins une plante. Ils sont agencés de telle manière à ce que chaque filtre comprend ainsi trois *Caltha palustris,* trois *Juncus diffusas,* trois *Carex peusodocyperus,* et trois *Mentha aquatica.* Les filtres supérieurs sont couverts par une membrane géotextile ou d'une plaque de PVC percée pour laisser passer les parties aériennes des végétaux plantés dans les pots.

Un filtre inférieur planté (63) est placé au niveau du sol, en aval des filtres supérieurs plantés. Il prend la forme d'un bac en forme de U de 0,40m de hauteur. Les parties latérales ont une longueur de 2,3 m et une largeur de 0,35 m tandis que la base du U a une longueur de 1,69 m et une largeur de 0,40 m. Ce filtre inférieur contient de la pouzzolane dans laquelle est plantée quinze *Phalaris arundinacea,* quinze *Lythrum salicaria,* et quinze *Phragmites australis.* De part sa masse, le bac inférieur permet avantageusement de stabiliser la structure porteuse.

La circulation du flux d'eau entre les différents filtres est assurée par la gravité.

En sortie de système de filtration, une pompe (7) calibrée à un débit équivalent au débit de l'entrée de l'eau dans le système de filtration envoie l'eau filtrée dans une conduite en polyéthylène pression de diamètre 32 mm. Cette conduite est directement reliée au retour bassin en aval du répartiteur à l'aide d'une dérivation en T (9), garantissant l'absence de reflux. Un système de stérilisation à UV (8) est installé en aval de cette dérivation, pour garantir l'isolement bactériologique du système et préserver l'utilisateur de toute contamination.

Des buses (10) permettent la restitution de l'eau filtrée dans le bassin de baignade.

### Paramètres physicochimique de la filtration

Après installation du système de filtration, des prélèvements d'eau de baignade ont été effectuées tous les deux jours sur une période de 1 mois. Des mesures des solides totaux dissous (TDS) et de la concentration en phosphate ont été réalisées sur ces prélèvements.

La concentration en phosphate a été mesurée par méthode colorimétrique. Le kit commercial HANNA Mini-photomètre checker et son réactif Phosphates Low Range commercialisé par HANNA^{®} instruments a été utilisé.

Les solides totaux dissous (TDS) ont quant à eux été mesurés par conductimétrie.

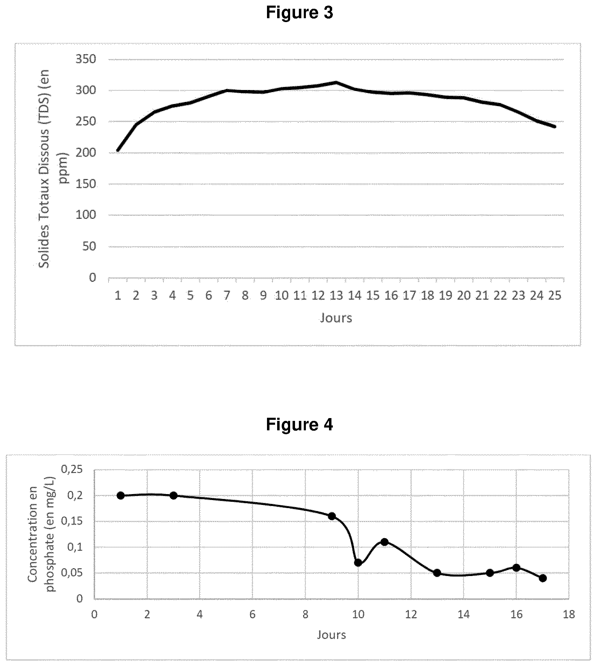

Comme le montre la figure 3, le système de filtration de la piscine permet la stabilisation, puis la diminution de la quantité de solides totaux dissous (TDS). Après 1 mois d'utilisation, cette quantité de Solides Totaux Dissous devient inférieure ou égale à 250 ppm.

L'évolution de la concentration en phosphate est présentée sur la figure 4. Il apparait qu'après 15 jours d'utilisation, la concentration en phosphate devient inférieure à une valeur de 0,05 mg/L.

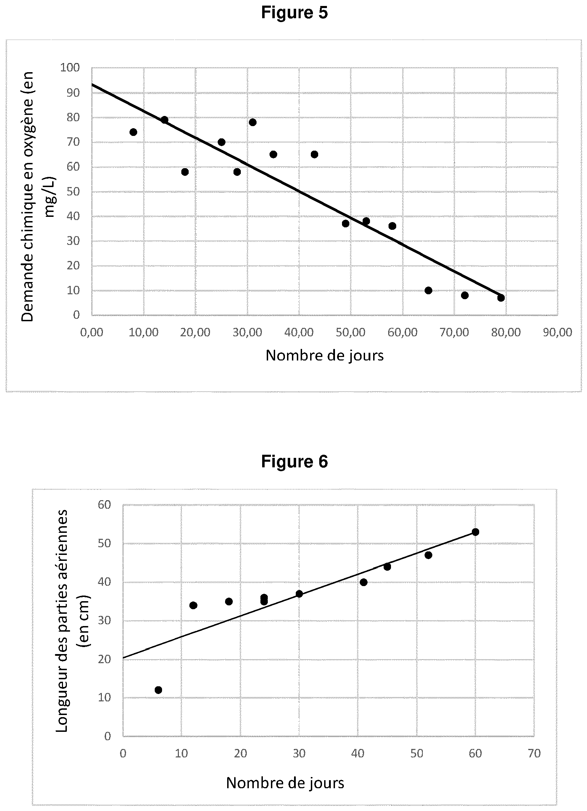

L'évolution de la demande chimique en oxygène est présentée sur la figure 5. La demande chimique en oxygène a été étudiée sur une durée de 80 jours. Il apparait que le système de filtration selon l'invention permet avantageusement de diminuer la demande chimique en oxygène de l'eau de baignade. Celle-ci a notamment été réduite de moitié après 40 jours de fonctionnement (par rapport à la demande chimique en oxygène initiale). Après 65 jours d'utilisation, le système de filtration selon l'invention permet d'obtenir une eau de baignade présentant une demande chimique en oxygène inférieure ou égale à 10.

### Résultats visuels

Le système de filtration selon l'invention a été installé sur une piscine à l'abandon contenant de nombreuses algues filamenteuses et cyanobactéries. De plus, l'eau de baignade de la piscine était trouble et de couleur verte.

Après 7 jours de fonctionnement du système de filtration, l'eau de la piscine a repris une couleur claire, malgré la subsistance d'une turbidité. Un délai de 18 jours a été nécessaire pour la disparition complète du trouble.

### Croissance des végétaux dans un filtre planté selon l'invention :

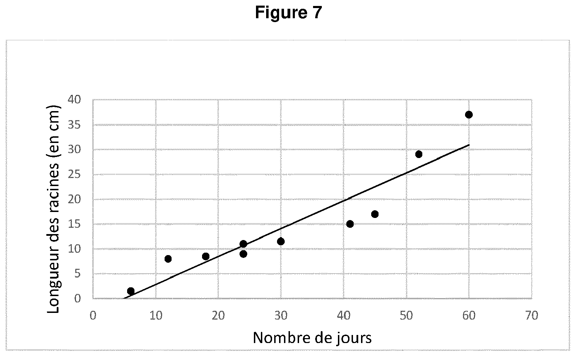

La croissance des végétaux présents dans les filtres plantés a été suivie pendant 80 jours après l'installation et la mise en fonctionnement d'un système de filtration selon l'invention. Il apparait que les végétaux choisis ont pu vivre et se développer pour la plupart. A titre d'exemple, la figure 6 présente la croissance des parties aériennes des menthes aquatiques *Mentha aquatica* présentes dans le système de filtration et la figure 7 présente la croissance de leurs racines. Il apparait que la croissance des parties aériennes et racinaires des menthes aquatiques débute dans les jours suivants la mise en fonctionnement du système de filtration, et se poursuit de manière régulière au cours de l'utilisation.

## Revendications

1. Un système de filtration d'eau
**Caractérisé en ce que:**
o il prend la forme d'une serre ;
o il présente une surface au sol inférieure ou égale à 10m2 ;
o il comprend une superposition de plusieurs filtres, prenant la forme de bacs, aptes à successivement traiter l'eau provenant d'un bassin de baignade avant de la retourner à celui-ci, avec :
a) en amont, au moins deux ensembles disposés en parallèle de trois filtres supérieurs plantés disposés en série, chaque filtre planté qualifié de supérieur comprenant des pots immergés permettant le passage de l'eau et comprenant un substrat neutre et inerte accueillant les plantes du filtre ; et
b) en aval, au moins un filtre planté qualifié d'inférieur qui comprend des agrégats non solubles aptes à permettre la pousse de plantes et à capter les particules en suspension dans l'eau qui reçoit l'eau à filtrer du au moins un bassin filtré supérieur.

2. Le système de filtration selon la revendication 1, **caractérisé en ce que** :
• ledit au moins un filtre planté inférieur comprend :
a) Au moins une plante appartenant au genre *Lythrum* ;
b) Au moins une plante appartenant au genre *Phalaris* ; et
c) Au moins une plante appartenant au genre *Phragmites*
• ledit au moins un filtre planté supérieur comprend :
a) Au moins une plante appartenant au genre *Caltha* ;
b) Au moins une plante appartenant au genre *Juncus* ; et
c) Au moins une plante appartenant au genre *Carex.*

3. Le système de filtration selon l'une quelconque des revendications 1 à 2, **caractérisé en ce que** les filtres supérieurs sont recouvert d'une membrane de géotextile ou d'une plaque de PVC percée de telle manière à permettre le passage des parties aériennes des plantes desdits filtres.

4. Une piscine comprenant :
o un bassin de baignade,
o un système de filtration d'eau,
o un circuit d'acheminement d'eau reliant le bassin de baignade au système de filtration d'eau ; et
o au moins une pompe permettant le transfert de l'eau entre le bassin de baignade et le système de filtration,
**caractérisé en que** le système de filtration est tel que défini à l'une quelconque des revendications 1 à 3 et ce qu'il présente une surface au sol inférieure ou égale à 20% de la surface au sol du bassin de baignade.

5. Une piscine selon la revendication 4, **caractérisée en ce qu'**elle comprend en outre au moins un système de stérilisation par Ultra-Violets (UV).

6. Un procédé de filtration de l'eau d'une piscine comprenant les étapes de :
o pomper l'eau d'un bassin de baignade vers un système de filtration à travers un circuit d'acheminement ;
o filtrer cette eau au sein dudit système de filtration ; et
o retourner l'eau une fois filtrée, de préférence à l'aide d'une seconde pompe, au bassin de baignade toujours à travers ce même circuit ;
**caractérisé en ce que** le système de filtration est tel que défini à l'une quelconque des revendications 1 à 3.

7. Une utilisation d'un système de filtration tel que défini à l'une quelconque des revendications 1 à 3 pour la filtration de l'eau d'une piscine.

## Patentansprüche

1. Wasserfiltrationssystem,
**dadurch gekennzeichnet, dass**
o es die Form eines Gewächshauses hat,
o es eine Grundfläche kleiner oder gleich 10 m² aufweist,
o es übereinander mehrere Filter umfasst, die die Form von Becken haben, die in der Lage sind, nacheinander das Wasser zu behandeln, das einem Schwimmbecken entstammt, bevor es in dieses zurückgeleitet wird, mit
a) stromaufwärts mindestens zwei parallel zueinander angeordneten Einheiten von drei in Reihe angeordneten, oberen bepflanzten Filtern, wobei jeder als oberer bezeichnete bepflanzte Filter eingetauchte Töpfe umfasst, die den Durchfluss des Wassers erlauben und ein neutrales und inertes Substrat enthalten, das die Pflanzen des Filters aufnimmt, und
b) stromabwärts mindestens einen als unterer bezeichneten bepflanzten Filter, der unlösliche Aggregate enthält, die geeignet sind, das Wachstum von Pflanzen zu ermöglichen und im Wasser suspendierte Partikel abzufangen, der das zu filtrierende Wasser des mindestens einen oberen Filterbeckens empfängt.

2. Wasserfiltrationssystem nach Patentanspruch 1, **dadurch gekennzeichnet, dass**
• der mindestens eine untere bepflanzte Filter enthält:
a) mindestens eine Pflanze der Gattung *Lythrum,*
b) mindestens eine Pflanze der Gattung *Phalaris,* und
c) mindestens eine Pflanze der Gattung *Phragmites,*
• der mindestens eine obere bepflanzte Filter enthält:
a) mindestens eine Pflanze der Gattung *Caltha,*
b) mindestens eine Pflanze der Gattung *Juncus,* und
c) mindestens eine Pflanze der Gattung *Carex*.

3. Wasserfiltrationssystem nach irgendeinem der Patentansprüche 1 bis 2, **dadurch gekennzeichnet, dass** die oberen Filter mit einer Geotextil-Folie oder einer PVC-Platte bedeckt sind, dafür durchbrochen, den Durchtritt der oberirdischen Teile der Pflanzen der genannten Filter zu ermöglichen.

4. Schwimmbad, umfassend:
o ein Schwimmbecken,
o ein Wasserfiltrationssystem,
o einen Wasserleitungskreislauf, der das Schwimmbecken mit dem Wasserfiltrationssystem verbindet, und
o mindestens eine Pumpe, die die Überleitung des Wassers zwischen dem Schwimmbecken und dem Wasserfiltrationssystem ermöglicht,
**dadurch gekennzeichnet, dass** das Filtrationssystem dem in irgendeinem der Patentansprüche 1 bis 3 definierten entspricht und eine Grundfläche kleiner oder gleich 20% der Grundfläche des Schwimmbeckens aufweist.

5. Schwimmbad nach Patentanspruch 4, **dadurch gekennzeichnet, dass** es außerdem mindestens ein System zur Sterilisierung durch UV-Licht umfasst.

6. Verfahren zur Filtration des Wassers eines Schwimmbades, folgende Schritte umfassend:
o Pumpen des Wassers aus einem Schwimmbecken durch einen Wasserleitungskreislauf zu einem Filtrationssystem,
o Filtration dieses Wassers im genannten Filtrationssystem, und
o Rückleitung des so filtrierten Wassers, vorzugsweise mit Hilfe einer zweiten Pumpe durch denselben Wasserleitungskreislauf ins Schwimmbecken,
**dadurch gekennzeichnet, dass** das Wasserfiltrationssystem dem in irgendeinem der Patentansprüche 1 bis 3 definierten entspricht.

7. Gebrauch eines Wasserfiltrationssystems nach irgendeinem der Patentansprüche 1 bis 3 zur Filtration des Wassers eines Schwimmbades.

## Claims

1. A water filtration system
**Characterised in that:**
o it takes the shape of a greenhouse;
o it has a ground surface area less than or equal to 10m²;
o it comprises a superposition of several filters, taking the shape of tanks, capable of successively treating the water coming from a bathing pool before returning it to the pool, with:
a) upstream, at least two sets arranged in parallel of three planted top filters arranged in series, each planted filter described as upper comprising submerged pots allowing water to pass through and comprising a neutral and inert substrate accommodating the filter plants ; and
b) downstream, at least one planted filter described as lower, which includes non-soluble aggregates able to allow the growth of plants and to capture the particles in suspension in the water receiving the water to be filtered from the at least one upper filtered basin.
able to allow the growth of plants and to capture the particles in suspension

2. The filtration system according to claim 1, **characterised in that:**
• the said at least one lower planted filter comprises:
a) At least one plant belonging to the genus *Lythrum*;
b) At least one plant belonging to the genus *Phalais*; and
c) At least one plant belonging to the genus *Phragmites*;
• said at least one upper planted filter comprises :
a) At least one plant belonging to the genus *Caltha*;
b) At least one plant belonging to the genus *Juncus*; and
c) At least one plant belonging to the genus *Carex.*

3. The filtration system according to any one of claims 1 to 2, **characterised in that** the upper filters are covered with a geotextile membrane or a pierced PVC plate in such a way as to allow the passage of the aerial parts of the plants of the said filters.

4. A swimming pool comprising :
o a bathing pool,
o a filtration system,
o a water conveyance circuit connecting the bathing pool to the water filtration system; and
o at least one pump for transferring water between the bathing pool and the filtration system,
**Characterised in that** the filtration system is as defined in any one of claims 1 to 3 and **in that** it has a ground surface area less than or equal to 20% of the ground surface area of the bathing pool.

5. A swimming pool according to claim 4, **characterised in that** it further comprises at least one ultraviolet (UV) sterilisation system.

6. A method for filtering swimming pool water comprising the steps of
o pumping water from a bathing pool to a filtration system via a conveyance circuit;
o filter this water within the said filtration system; and
o return the water once filtered, preferably by means of a second pump, to the bathing pool via the same circuit;
**Characterised in that** the filtration system is as defined in any one of claims 1 to 3.

7. A use of a filtration system as defined in any one of claims 1 to 3 for the filtration of swimming pool water.
